# EUROPEAN PATENT APPLICATION

(11) **EP 4 845 187 A1**
(43) Date of publication of application: **25.11.2026**
(21) Application number: 26179610.6
(22) Date of filing: 19.05.2026
(51) Int. Cl.: H04W 4/80, H04W 72/0446

(54) **METHOD AND RELATED SYSTEM OF MANAGING DATA COMMUNICATION, IN A TRAINING CLASS, BETWEEN A CENTRAL UNIT OF TRAINING DATA COLLECTION AND A PLURALITY OF PORTABLE ELECTRONIC DEVICES SUITABLE FOR TRACKING USER TRAINING DATA**

(30) Priority: 21.05.2025 IT 202500011536
(71) Applicant: Technogym S.p.A., 47521 Cesena (FC) (IT)
(72) Inventor: TANA, Marcello, I-47521 Cesena, FORLI'-CESENA (IT); FALCINELLI, Boris, I-47521 Cesena, FORLI'-CESENA (IT); MECCOLI, Lorenzo, I-47521 Cesena, FORLI'-CESENA (IT); ZAMAGNI, Enrico, I-47521 Cesena, FORLI'-CESENA (IT); SARTONI, Gianni, I-47521 Cesena, FORLI'-CESENA (IT)
(74) Representative: Mozzi, Matteo

(57) **Abstract**

Method (300) of managing the data connection, in a training class, between a central unit of training data collection and a plurality of portable electronic devices suitable for tracking user training data, each portable electronic having associated a recognition identifier and a set time-slot for a subsequent reconnection to the central unit of training data collection, said set time-slot having been assigned by the portable electronic device prior to the previous disconnection from the central unit of training data collection, each portable electronic device being associated with a respective user of the training class. The method (300) comprises steps of: connecting (301), by means of said portable electronic device to the central unit of training data collection in the set time-slot associated with said portable electronic device; sending (302) to the central unit of training data collection, by said portable electronic device, user training data acquired by said portable electronic device relating to the training of the respective user in the training class; following the reception of the user training data sent by said portable electronic device, verifying (303), by the central unit of training data collection, free time-slots subsequent to the previously set time-slot assigned to the portable electronic device for the connection to the central unit of training data collection; assigning (304), by the central unit of training data collection, to said portable electronic device, a set time-slot, subsequent to the previously assigned set time-slot, for a next connection to the central unit of training data collection; following the receipt of the set time-slot for the next connection to the central unit of training data collection, disconnecting (305), by the portable electronic device, from the central unit of training data collection.

## Description

### Field of the invention

The present invention relates to the fitness sector and, in particular, to a system and related method of managing data communication, in a training class, between a central data collection unit and a plurality of portable electronic devices suitable for tracking user training data.

### Technological background of the invention

The tracking of the training data of a user is a very important aspect for improving the training experience of the user.

In this regard, also in a training class, each user is provided with a portable electronic device (for example, a smartwatch) suitable for tracking the training data of the user in the training class.

Further, still in a training class, it is necessary that the training data tracked by each portable electronic device be conveyed, preferably in real-time, to a central data collection unit to be managed, for example for arranging or updating specific training programs, or simply for statistical purposes, of the training class.

In light of this, the data connection management of each portable electronic device to the central data collection unit is a very important aspect, also in consideration of the current technologies and the number of portable electronic devices that could simultaneously request data connection to the central collection unit.

For example, the operating system usable by each portable electronic device and/or the implementable wireless technology and the related wireless communication protocol constitute technological limitations that render entirely unpredictable the possibility that a portable electronic device may successfully connect to the central data collection unit, namely for a time sufficient to be able to communicate without interruption the updated tracked training data or to avoid the data connection being abruptly interrupted in favor of the data connection of another portable electronic device.

In light of this, there is a strong need for a data connection management method, in a training class, between a central unit of training data collection and a plurality of portable electronic devices suitable for tracking user training data, allowing such limits to be overcome as much as possible, wherein each portable electronic device is guaranteed the possibility of successfully connecting to the central data collection unit in order to reliably communicate the most up-to-date tracked training data to the central data collection unit.

### Summary

It is the object of the present invention to devise and provide a method of managing the data connection, in a training class, between a central unit of training data collection and a plurality of portable electronic devices suitable for tracking user training data, allowing at least partially to obviate the drawbacks complained of above with reference to the prior art, in particular, that is capable of overcoming as many technological limits as possible, thus being more versatile, wherein each portable electronic device is guaranteed the possibility of successfully connecting to the central unit for collecting data in order to communicate, in a reliable manner, the most up-to-date tracked training data to the central data collection unit.

Such an object is achieved by a method according to claim 1.

Preferred embodiments of said method are defined in the dependent claims.

The present invention also relates to a system adapted to implement such a method.

### Brief description of the drawings

Further features and advantages of the method and the related system according to the invention will become apparent from the following description of preferred embodiments, given by way non-limiting indication, with reference to the accompanying drawings, in which:
- Figure 1 shows, by means of a block diagram, a system of managing the data connection, in a training class, between a central unit of training data collection and a plurality of portable electronic devices suitable for tracking user training data, according to the present invention;
- Figure 2a diagrammatically shows a plurality of portable electronic devices and set time-slots for the connection of each of them to a central unit of training data collection, according to the present invention;
- Figures 2b-2n diagrammatically show a sequence of connections / disconnections of a plurality of portable electronic devices, with respect to a central unit of training data collection, along set connection time-slots, according to an embodiment of the system in Figure 1 and the related method according to the present invention, and
- Figure 3 diagrammatically shows, by means of a block diagram, a method of managing the data connection, in a training class, between a central unit of training data collection and a plurality of portable electronic devices suitable for tracking user training data, according to the present invention.

It should be noted that, in the aforesaid figures, equal or similar elements are indicated by the same numeric and/or alphanumeric reference.

### Detailed description

With reference to the aforesaid figures, a system 100 of managing data connection, in a training class, between a central unit of training data collection and a plurality of portable electronic devices suitable for tracking user training data, hereinafter also simply management system or just system, according to the present invention, is now described.

"Training class" is intended to mean training of a plurality of users simultaneously within the same training environment (gym or club), each performing bodyweight exercises or using an exercise machine of a plurality of exercise machines of the same type (for example, treadmills, bikes, and so on) arranged within such training environment.

A training class is managed and coordinated by a coach or trainer who, in addition to motivating and encouraging the users during training, imparts to the users an indication of how to perform the workout, as free-body training or on the respective exercise machine, indicating, for example, when and how much to vary one or more parameters of that specific type of exercise machine, so that a specific training program previously selected by the trainer for the users attending that training class is followed and complied with.

"User training data" is intended to mean data representative of physiological parameters of the user, measurable during the performance of the training, whether free-body or by means of the use of an exercise machine, such as, for example, heart rate, sweat, temperature, physiological parameters, and so on.

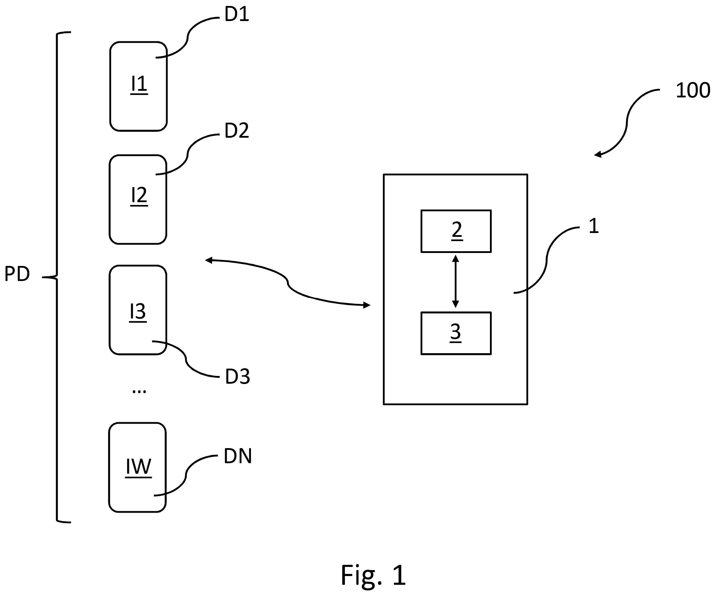

According to the present invention, with reference to Figure 1, the system 100 comprises a central unit 1 of training data collection.

Such central unit 1 of training data collection is an electronic processor installable, for example, as a totem within the training environment in which the training provided as a "training class" takes place.

From a technical point of view, the central unit 1 of training data collection comprises at least one data processing unit 2 (diagrammatically shown in Figure 1), for example, a microcontroller or a microprocessor.

The central unit 1 of training data collection further comprises at least one memory unit 3 (also diagrammatically shown in Figure 1) operatively connected to the at least one data processing unit 2.

The at least one data processing unit 2, is configured to load and execute one or more program codes (previously stored in the at least one memory unit 3) so that the central unit 1 of training data collection can perform respective functions, including management of the data connection, in a training class, between the central unit of training data collection and a plurality of portable electronic devices suitable for tracking user training data, as will be described hereinafter.

Returning, in general, to the present invention and to Figure 1, the system 100 further comprises a plurality PD of portable electronic devices D1-DN, with N being an integer, suitable for tracking user training data, also shown diagrammatically in Figure 1.

Each portable electronic device D1-DN is associated with a respective user of the training class.

Examples of portable electronic devices D1-DN suitable for tracking user training data may be personal devices wearable by the user directly (smartwatch on the user's wrist) or indirectly (smartphone housed within a respective band worn on the user's forearm) or any other personal device wearable by the user, such as a bracelet, a cuff, a band, and so on.

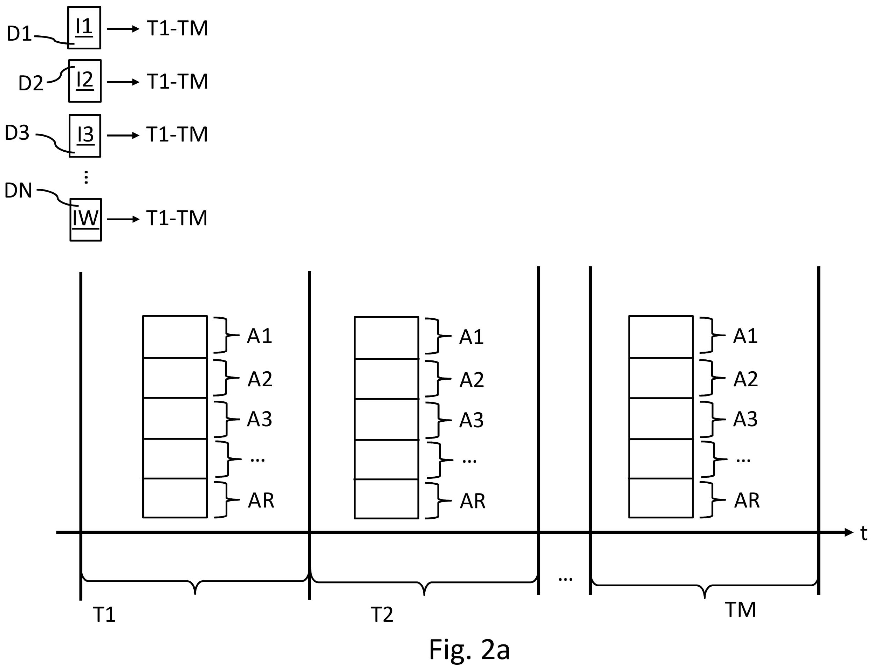

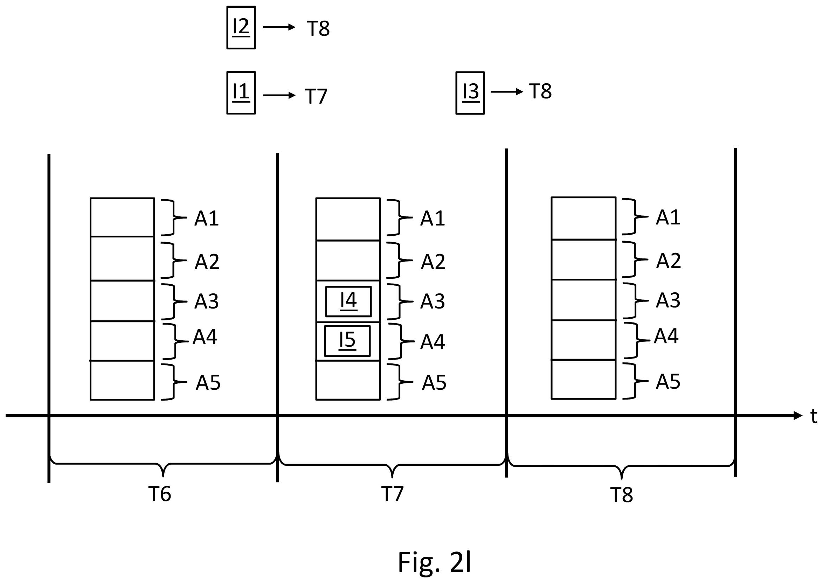

According to the present invention, now also referring to Figure 2a, each portable electronic device D1-DN is associated with a recognition identifier I1-IW (token), with W being an integer, and a set time-slot T1-TM for subsequent reconnection to the central unit 1 of training data collection.

The set time-slot T1-TM has been assigned to the portable electronic device D1-DN prior to the previous disconnection from the central unit 1 of training data collection.

It should be noted that, in Figure 2a, at a portable electronic device of the plurality PD of portable electronic devices D1-DN, as recognition identifier, a reference selected from those comprised between I1 and IM is indicated, for example:
D1 -> I1; D2 -> I2; D3 -> I3; ... ; DN -> IM.

Further, still in Figure 2a, at a portable electronic device of the plurality PD of portable electronic devices D1-DN, as associated set time-slot, the reference T1-TM is indicated in general which means that the associated set time-slot may be any one of those included in the plurality T1, T2, T3, ..., TM, with M being an integer. As will also be described hereinafter, multiple portable electronic devices D1-DN of said plurality may have associated the same time-slot T1-TM.

From a functional standpoint, according to the present invention, each portable electronic device D1-DN is configured to connect to the central unit 1 of training data collection in the set time-slot T1-TM associated with said portable electronic device D1-DN.

Further, each portable electronic device D1-DN is configured for sending, to the central unit 1 of user training data collection, user training data acquired by said portable electronic device D1-DN, relating to the training of the respective user in the training class.

The user training data sent are the most recently updated user training data, namely acquired by said portable electronic device D1-DN, before or at the time instant of transmission of such user training data.

From a functional standpoint, according to the present invention, the central unit 1 of training data collection is configured to verify, following receipt of the user training data sent by a portable electronic device T1-TM of said plurality PD, free time-slots T1-TM to be assigned subsequent to the set time-slot T1-TM previously assigned to said portable electronic device D1-DN for connection of said portable electronic device D1-DN to the central unit 1 of training data collection.

Further, the central unit 1 of training data collection is configured to assign, to said portable electronic device D1-DN, a set time-slot T1-TM, subsequent to the set time-slot previously assigned, for subsequent connection to the central unit 1 of training data collection.

The set assigned time-slot T1-TM may be, for example, the first one free subsequent to the set time-slot previously assigned.

More generally, the time-slots T1-TM free to be assigned, hence the assigned set time-slots, may be any and not necessarily in chronological order.

Each portable electronic device D1-DN is configured to disconnect from the central unit 1 of training data collection, upon receipt of the set time-slot T1-TM assigned for subsequent connection to the central unit 1 of training data collection.

It is noted that what has been described above relating to the present invention as a whole refers to a steady-state situation achieved by each portable electronic device D1-DN of said plurality PD, that is, the situation in which each portable electronic device D1-DN of said plurality PD has already established a first data connection with the central unit 1 of training data collection.

Such situation will be described below with reference to an embodiment of the present invention.

According to an embodiment, each portable electronic device D1-DN of said plurality PD is configured to verify, at each data connection with the central unit 1 of training data collection, whether such data connection is the first data connection with the central unit 1 of training data collection or a data connection subsequent to the first data connection with the central unit 1 of training data collection.

According to an embodiment, in combination with the foregoing, the central unit 1 of training data collection is configured to verify, following a data connection of a portable electronic device D1-DN of said plurality PD, whether or not the recognition identifier I1-IW (token) associated with said portable electronic device D1-DN is known.

If the recognition identifier I1-IW (token) associated with said portable electronic device D1-DN is known to the central unit 1 of training data collection, the central unit 1 of training data collection is configured to send a value representative of the positive outcome of this verification to said portable electronic device D1-DN.

In this case, the portable electronic device D1-DN is configured to provide to the central unit 1 of training data collection, at the subsequent data connection, the same recognition identifier I1-IW (token) (maintain the rendez-vous procedure).

If the recognition identifier I1-IW (token) associated with said portable electronic device D1-DN is unknown to the central unit 1 of training data collection, the central unit 1 of training data collection is configured to send a value representative of the negative outcome of this verification to said portable electronic device D1-DN.

In this case, the portable electronic device D1-DN is configured to return to an initial state (wherein it has no assigned recognition identifier or token) and request from the central unit 1 of training data collection, at the subsequent data connection, a new recognition identifier I1-IW (token) (handshake procedure), as if it were the first data connection.

According to an embodiment, in combination with the preceding one, if the verified data connection is a data connection subsequent to the first data connection with the central unit 1 of training data collection, the portable electronic device D1-DN is configured to read information representative of the training from the central unit 1 of training data collection.

The "information representative of the training", by way of example, comprises: the name of the training prescribed for that training class (for example HIIT, strengthen the abdominals, increase leg strength etc...) , the type of training (cardio, strength, mobility, and so on), type of data connection between the central unit 1 of training data collection and the portable electronic device (for example, whether fixed data connection or data connection based on the assignment of a recognition identifier and data connection time-slot), the status of the training (paused, active, terminated), the time elapsed since the start of the training, and so on.

According to an embodiment, in combination with any one of the preceding ones, in the event that the verified data connection is a data connection subsequent to the first data connection with the central unit 1 of training data collection, the portable electronic device D1-DN is configured to set a set time instant of interruption of the data connection with the central unit 1 of training data collection, based on a set minimum time interval of data reconnection (minimum reconnection time-out) between the portable electronic device D1-DN and the central unit 1 of training data collection, provided by the central unit 1 of training data collection based on the set time-slot T1-TM assigned for the next data connection, or based on the time-slot that is found available (minimum reconnection time-out).

For example, the central unit 1 of training data collection communicates to the portable electronic device to reconnect in three seconds, therefore the portable electronic device waits three seconds before reconnecting again to the central unit 1 of training data collection.

The set minimum data reconnection time interval between the portable electronic device D1-DN and the central unit 1 of training data collection is equal to a few seconds, for example three or four seconds.

It should be noted that the setting of the set time instant for interrupting the data connection with the central unit 1 of training data collection, and thus the counting of the set data connection time interval between the portable electronic device D1-DN and the central unit 1 of training data collection, is initiated at the moment when the central unit 1 of training data collection confirms the data connection to the portable electronic device D1-DN.

According to an embodiment, in combination with any of the preceding ones, if the verified data connection is a data connection subsequent to the first data connection with the central unit 1 of training data collection, the central unit 1 of training data collection is configured to communicate to the portable electronic device, whose data connection has just been verified, the updated training status value.

According to an embodiment, in combination with any of the preceding ones in which the portable electronic device D1-DN performs the step of verifying, at each data connection with the central unit 1 of training data collection, whether such data connection is the first data connection with the central unit 1 of training data collection or a data connection subsequent to the first data connection with the central unit 1 of training data collection, if the verified data connection is the first data connection with the central unit 1 of training data collection, the portable electronic device D1-DN is configured to read information representative of the training from the central unit 1 of training data collection and to send to the central unit 1 of training data collection at least one user identification code (UserID).

Examples of "information representative of the training" have been provided above.

In this embodiment, the central unit 1 of training data collection is configured to:
- associate a recognition identifier I1-IW (token) with the user identification code received from the portable electronic device D1-DN;
- send to the portable electronic device D1-DN the respective user identification code with the associated recognition identifier I1-IW (token).

From the subsequent data connection, the portable electronic device D1-DN is configured to log into the central unit 1 of training data collection based on the associated recognition identifier I1-IW (token), as described above according to the present invention.

According to an embodiment, each portable electronic device D1-DN of said plurality PD is configured to verify, at each data connection with the central unit 1 of training data collection, whether such data connection is the first data connection with the central unit 1 of training data collection or a data connection subsequent to the first data connection with the central unit 1 of training data collection, based on said information representative of the training, in particular of the training type, wherein it is indicated whether the data connection is based on a recognition identifier and whether such recognition identifier is valid.

According to an embodiment, in combination with the previous one, the central unit 1 of training data collection is configured to update a training status value (paused, active, terminated).

According to an embodiment, in combination with any one of the preceding ones, if the verified data connection is the first data connection with the central unit 1 of training data collection, the central unit 1 of training data collection is configured to update a training duration value.

According to an embodiment, in combination with any one of the preceding ones, if the verified data connection is the first data connection with the central unit 1 of training data collection, the central unit 1 of training data collection is configured to associate a user code (UserID) of the user with which said portable electronic device is associated with the user's training data received from said portable electronic device D1-DN.

Such user code (UserID) has been previously communicated by the portable electronic device to the central unit 1 of training data collection at the first data connection.

The association of the user code (UserID) with the training data may be subsequently employed for viewing (by the central unit 1 of training data collection or by the portable electronic device) the training data of the user having said user code (UserID).

According to an embodiment, in combination with any one of the preceding ones, the data connection between each portable electronic device D1-DN and the central unit 1 of training data collection is a data connection in a wireless mode by means of a respective data communication channel in wireless technology such as, for example, a Wi-Fi, Bluetooth, NFC data communication channel, and so on.

According to an embodiment, in combination with any one of the preceding ones, the time duration of each set time-slot T1-TM for a subsequent reconnection to the central unit 1 of training data collection is an updatable parametric value.

The time duration of each set time-slot T1-TM for subsequent reconnection to the central unit 1 of training data collection is, for example, three seconds.

According to an embodiment, in combination with any one of the preceding ones, each portable electronic device D1-DN is configured to set a set time interval in which to make the data connection to the central unit 1 of training data collection (connection operation time-out).

The set time interval for performing the data connection to the central unit 1 of training data collection is equal to, for example, four seconds.

According to an embodiment, in combination with the preceding one, each portable electronic device D1-DN is configured to verify and disconnect from the central unit 1 of training data collection in the event that the data connection has not been established upon reaching the set time interval in which to make the data connection to the central unit 1 of training data collection.

According to an embodiment, in combination with any one of the preceding ones, each portable electronic device D1-DN is configured to set a set time interval in which to send, to the central unit 1 for user training data collection, the user training data acquired by said portable electronic device D1-DN during the training of the respective user in the training class (biometric data sending time-out).

The set time interval in which to send, to the central unit 1 of user training data collection, the user training data acquired by said portable electronic device D1-DN is, for example, equal to one hundred and twenty seconds.

According to an embodiment, in combination with the preceding one, each portable electronic device D1-DN, is configured to count, when connected to the central unit 1 of training data collection, the time period of data connection with the central unit 1 of training data collection.

Further, in this embodiment, the portable electronic device D1-DN is configured to compare the counted time period of data connection with the set time limit interval for sending the user training data acquired by said portable electronic device D1-DN.

In the event that the counted connection time period is less than the set time limit interval for sending the user training data acquired by said portable electronic device D1-DN, the portable electronic device D1-DN is configured to maintain the data connection with the central unit 1 of training data collection.

In the event that the counted connection time period is equal to the set limit time interval for sending the user training data acquired by said portable electronic device D1-DN, the portable electronic device D1-DN, is configured to:
- disconnect from the central unit 1 of training data collection;
- count the data disconnection time from the central unit 1 of training data collection;
- connect to the central unit 1 of training data collection at the end of a set time period of data disconnection (equal, for example, to at least two or three seconds).

According to an embodiment, in combination with any one of the preceding ones, the assignment, to said portable electronic device D1-DN, of the set time-slot (T1-TM), subsequent to the set time-slot previously assigned, for a next connection to the central unit 1 of training data collection, is performed by the user training data collection unit 1.

According to an embodiment, alternatively to the preceding one but in combination with all the others, the assignment, to said portable electronic device D1-DN, of the set time-slot T1-TM, subsequent to the set time-slot previously assigned, for a next connection to the central unit 1 of training data collection, is by the portable electronic device D1-DN.

According to an embodiment, in combination with any one of the preceding ones, the central unit 1 of training data collection is configured to provide, within each time-slot T1-TM, a set number A1-AR of allocations, reserved for the plurality PD of portable electronic devices, which may be supported within the same time-slot (Figure 2a).

The set number A1-AR of allocations reserved for the plurality PD of portable electronic devices, dependent on the technology employed for wireless connection between each portable electronic device D1-DN and the central unit 1 of training data collection, is less than the number of portable electronic devices D1-DN of said plurality.

It is further noted that the set number A1-AR of allocations reserved for the plurality PD of portable electronic devices that may be supported within the same time-slot does not correspond to the maximum number of allocations reserved for the plurality PD of portable electronic devices that may be supported within the same time-slot.

Indeed, one or more (conventionally one) allocations within the same time-slot are deliberately not usable by the system 100 during its implementation, but are kept only as buffer or backup allocations possibly employable, should it be necessary, for the first data connection by new portable electronic devices.

Under steady-state conditions, in the event that there are no requests for first data connection by new portable electronic devices, such one or more buffer or backup allocations will never be employed.

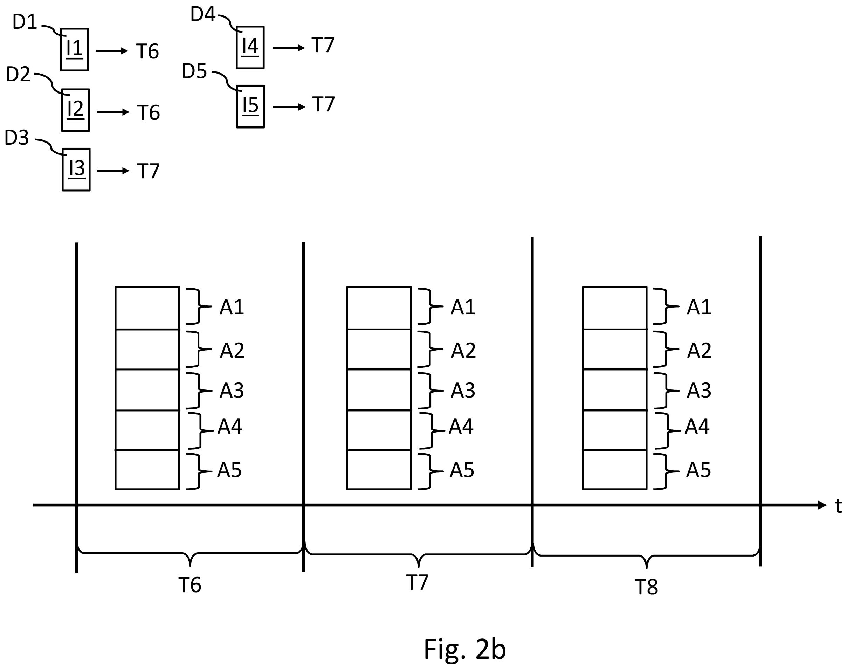

In the example of Figures 2b-2n, which will be described below, each time slot provides for a maximum number of five possible allocations A1-A5, but only four allocations A1-A4 (for example) are actually reserved for the plurality PD of portable electronic devices, while a fifth allocation A5 is not used since it is kept only as a buffer or back-up.

According to an embodiment, in combination with any one of the preceding ones, each portable electronic device D1-DN comprises user biometric parameter detection sensors.

Examples of such sensors for detecting user biometric parameters are heart rate detectors, accelerometers, sweat sensors, thermometers, and the like.

According to an embodiment, in combination with the preceding one, said user biometric parameters comprise heart rate, sweat, temperature, physiological parameters.

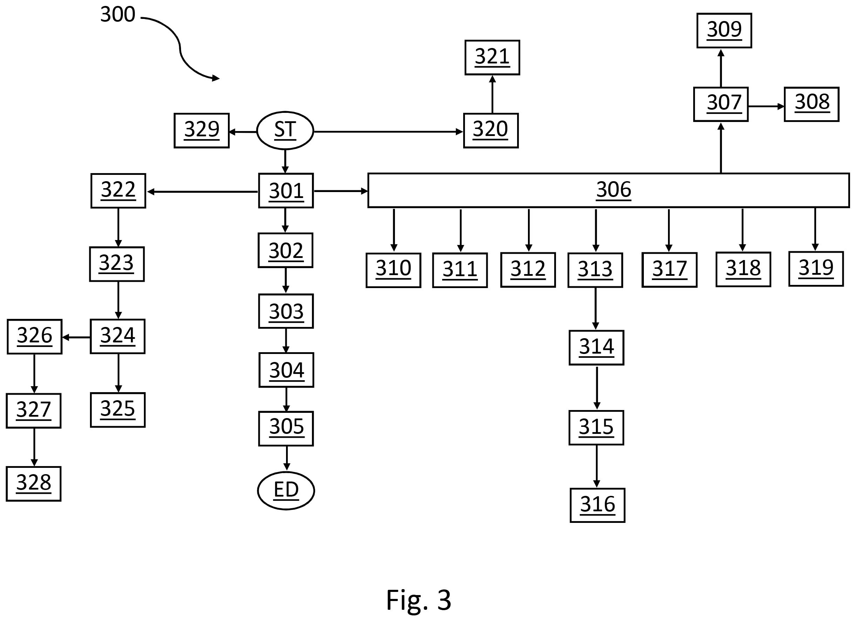

With reference now also to Figure 3, a method 300 of managing the data connection, in a training class, between a central unit 1 of training data collection and a plurality PD of portable electronic devices D1-DN suitable for tracking user training data, hereinafter also simply management method or just method, according to the present invention, is now described.

The definition and examples of "training class" and "user training data" were provided above, therefore not repeated here for brevity.

The central unit 1 of training data collection and the plurality PD of portable electronic devices D1-Dn have already been described above.

Each portable electronic device D1-DN is associated with a respective user of the training class.

Each portable electronic device D1-DN is associated with a recognition identifier I1-IW (token) and a set time-slot T1-TM for subsequent reconnection to the central unit 1 of training data collection.

The set time-slot T1-TM has been assigned to the portable electronic device D1-DN prior to the previous disconnection from the central unit 1 of training data collection.

It is reiterated that multiple portable electronic devices D1-DN of said plurality may have the same time-slot T1-TM associated.

With reference again to Figure 3, the method 300 comprises a symbolic step of starting ST.

The method 300 comprises a step of connecting 301, by a portable electronic device D1-DN said plurality PD of portable electronic devices D1-DN, to the central unit 1 of training data collection in the set time-slot T1-TM associated with said portable electronic device D1-DN.

The method 300 further comprises a step 302 of sending to the central unit 1 of training data collection, by said portable electronic device D1-DN, user training data acquired by said portable electronic device D1-DN, relating to the training of the respective user in the training class.

The user training data sent are the most recently updated user training data, namely acquired by said portable electronic device D1-DN, before or at the time instant of transmission of such user training data.

Following receipt of the user training data sent by said portable electronic device D1-DM, the method 300 comprises a step of verifying 303, by the central unit 1 of training data collection, free time-slots T1-TM subsequent to the set time-slot T1-TM previously assigned to said portable electronic device D1-DN for the connection of said portable electronic device D1-DN to the central unit 1 of training data collection.

The method 300 further comprises a step of assigning 304, by the central unit 1 of training data collection, to said portable electronic device D1-DN, a set time-slot T1-TM, subsequent to the set time-slot previously assigned, for subsequent connection to the central unit 1 of training data collection.

The assigned set time-slot T1-TM may be, for example, the first one free subsequent to the set time-slot previously assigned.

More generally, the time-slots T1-TM free to be assigned, hence the assigned set time-slots, may be any and not necessarily in chronological order.

Following receipt of the set time-slot T1-TM assigned for subsequent connection to the central unit 1 of training data collection, the method 300 comprises a step of disconnecting 305, by the portable electronic device D1-DN, from the central unit 1 of training data collection.

It is reiterated that what has been described above, relating to the present invention as a whole, refers to a steady-state situation achieved by each portable electronic device D1-DN of said plurality PD, namely the situation in which each portable electronic device D1-DN of said plurality PD has already performed a first data connection with the central unit 1 of training data collection (the situation will be described below with reference to an embodiment of the present invention).

The method 300 comprises a symbolic step of ending ED.

According to an embodiment, the method 300 comprises a step of verifying 306, by each portable electronic device D1-DN of said plurality PD, at each data connection with the central unit 1 of training data collection, whether such data connection is the first data connection with the central unit 1 of training data collection or a data connection subsequent to the first data connection with the central unit 1 of training data collection.

According to an embodiment, in combination with the preceding one, the method 300 comprises a step of verifying 307, by the central unit 1 of training data collection, following a data connection of a portable electronic device D1-DN of said plurality PD, the knowledge or otherwise of the recognition identifier I1-IW (token) associated with said portable electronic device D1-DN.

If the recognition identifier I1-IW (token) associated with said portable electronic device D1-DN is known to the central unit 1 of training data collection, the method 300 comprises a step of sending 308, by the central unit 1 of training data collection, a value representative of the positive outcome of this verification to said portable electronic device D1-DN.

In this case, the portable electronic device D1-DN will provide to the central unit 1 of training data collection, at the next data connection, the same recognition identifier I1-IW (token) (maintain the rendez-vous procedure).

If the recognition identifier I1-IW (token) associated with said portable electronic device D1-DN is unknown to the central unit 1 of training data collection, the method 300 comprises a step of sending 309, performed by the central unit 1 of training data collection, a value representative of the negative outcome of this verification to said portable electronic device D1-DN.

In this case, the portable electronic device D1-DN is configured to return to an initial state (wherein it has no assigned recognition identifier or token) and requests from the central unit 1 of training data collection, at the subsequent data connection, a new recognition identifier I1-IW (token) (handshake procedure), as if it were the first data connection.

According to an embodiment, in combination with the preceding one, if the verified data connection is a data connection subsequent to the first data connection with the central unit 1 of training data collection, the method 300 comprises a step of reading 310, by the portable electronic device D1-DN, to read information representative of the training from the central unit 1 of training data collection.

Examples of "information representative of the training" have been provided above.

According to an embodiment, in combination with any one of the preceding ones, if the verified data connection is a data connection subsequent to the first data connection with the central unit 1 of training data collection, the method 300 comprises a step of setting 311, by the portable electronic device D1-DN, a set time instant of interruption of the data connection with the central unit \ of training data collection, based on a set minimum time interval of data reconnection (minimum reconnection time-out) between the portable electronic device D1-DN and the central unit 1 of training data collection, provided by the central unit 1 of training data collection based on the set time-slot T1-TM assigned for the next data connection, or based on the time-slot that is found available (minimum reconnection time-out).

For example, the central unit 1 of training data collection communicates to the portable electronic device to reconnect in three seconds, therefore the portable electronic device waits three seconds before reconnecting again to the central unit 1 of training data collection.

As stated previously, the set minimum data reconnection time interval between the portable electronic device D1-DN and the central unit 1 of training data collection is equal to a few seconds, for example three or four seconds.

It should be noted that the setting of the set time instant for interrupting the data connection with the central unit 1 of training data collection, and thus the counting of the set data connection time interval between the portable electronic device D1-DN and the central unit 1 of training data collection, is initiated at the moment when the central unit 1 of training data collection confirms the data connection to the portable electronic device D1-DN.

According to an embodiment, in combination with any one of the preceding ones, if the verified data connection is a data connection subsequent to the first data connection with the central unit 1 of training data collection, the method 300 comprises a step of communicating 312, by the central unit 1 of training data collection, to the portable electronic device D1-DN whose data connection has just been verified, an updated training status value.

According to an embodiment, in combination with any one of the preceding ones in which the portable electronic device D1-DN performs the step of verifying 306, at each data connection with the central unit 1 of training data collection, whether such data connection is the first data connection with the central unit 1 of training data collection or a data connection subsequent to the first data connection with the central unit 1 of training data collection, if the verified data connection is the first data connection with the central unit 1 of training data collection, the method 300 comprises a step of reading 313, by the portable electronic device D1-DN, information representative of the training from the central unit 1 of training data collection, and sending 314 to the central unit 1 of training data collection at least one user identification code (UserID).

Examples of "information representative of the training" have been provided above.

In this embodiment, the method 300 comprises steps of:
- associating 315, by the central unit 1 of training data collection, a recognition identifier I1-IW (token) with the user identifier code received from the portable electronic device D1-DN;
- sending 316 to the portable electronic device (D1-DN), by the central unit 1 of training data collection, the respective user identification code with the associated recognition identifier I1-IW (token).

From the next data connection, the portable electronic device D1-DN will log into the central unit 1 of training data collection based on the associated recognition identifier I1-IW (token), as described above according to the present invention.

According to an embodiment, in combination with any one of the preceding ones in which the portable electronic device D1-DN performs the step of verifying 306, at each data connection with the central unit 1 of training data collection, whether such data connection is the first data connection with the central unit 1 of training data collection or a data connection subsequent to the first data connection with the central unit 1 of training data collection, is performed, by each portable electronic device D1-DN of said plurality PD, based on said information representative of the training, in particular of the training type wherein it is indicated whether the data connection is based on a recognition identifier and whether said recognition identifier is valid.

According to an embodiment, in combination with the preceding one, the method 300 further comprises a step of updating 317, by the central unit 1 of training data collection, a training status value (paused, active, terminated).

According to an embodiment, in combination with any one of the preceding ones in which the portable electronic device D1-DN performs the step of verifying 306, at each data connection with the central unit 1 of training data collection, whether such data connection is the first data connection with the central unit 1 of training data collection or a data connection subsequent to the first data connection with the central unit 1 of training data collection, if the verified data connection is the first data connection with the central unit 1 of training data collection, the method 300 further comprises a step of updating 318, by the central unit 1 of training data collection, a training duration value.

According to an embodiment, in combination with any one of the preceding ones, in which the portable electronic device D1-DN performs the step of verifying 306, at each data connection with the central unit 1 of training data collection, whether such data connection is the first data connection with the central unit 1 of training data collection or a data connection subsequent to the first data connection with the central unit 1 of training data collection, if the verified data connection is the first data connection with the central unit 1 of training data collection, the method 300 comprises a step of associating 319, by the central unit 1 of training data collection, to the user training data received from said portable electronic device D1-DN a user code (UserID) of the user with whom such portable electronic device D1-DN is associated.

Such user code (UserID) has been previously communicated by the portable electronic device to the central unit 1 of training data collection at the first data connection.

The association of the user code (UserID) with the training data may be subsequently employed for viewing (by the central unit 1 of training data collection or by the portable electronic device) the training data of the user having said user code (UserID).

According to an embodiment, in combination with any one of the preceding ones, the data connection between each portable electronic device D1-DN and the central unit 1 of training data collection is a data connection in a wireless mode by means of a respective data communication channel of wireless technology such as, for example, a Wi-Fi, Bluetooth, NFC data communication channel, and so on.

According to an embodiment, in combination with any one of the preceding ones, the time duration of each set time-slot T1-TM for a subsequent reconnection to the central unit 1 of training data collection is an updatable parametric value.

The time duration of each set time-slot T1-TM for subsequent reconnection to the central unit 1 of training data collection is, for example, three seconds.

According to an embodiment, in combination with any one of the preceding ones, the method 300 further comprises a step of setting 320, by each portable electronic device D1-DN, a set time interval in which to perform the data connection to the central unit 1 of training data collection (connection operation time-out).

The set time interval for performing the data connection to the central unit 1 of training data collection is equal to, for example, four seconds.

According to an embodiment, in combination with the preceding one, the method 300 further comprises a step of verifying and disconnecting 321, by each portable electronic device D1-DN, from the central unit 1 of training data collection in the event that the data connection has not been set upon reaching the set time interval in which to perform the data connection to the central unit 1 of training data collection.

According to an embodiment, in combination with any one of the preceding ones, the method 300 further comprises a step of setting 322, by each portable electronic device D1-DN, a set time interval in which to send, to the central unit 1 of user training data collection, the user training data acquired by said portable electronic device D1-DN during the training of the respective user in the training class (biometric data sending time-out).

The set time interval in which to send, to the central unit 1 of user training data collection, the user training data acquired by said portable electronic device D1-DN is, for example, equal to one hundred and twenty seconds.

According to an embodiment, in combination with the preceding one, the method 300 comprises steps of:
- counting 323, by the portable electronic device D1-DN connected to the central unit 1 of training data collection, the time period of data connection with the central unit 1 of training data collection;
- comparing 324, by the portable electronic device D1-DN, the counted time period of data connection with the set time limit interval for sending the user training data acquired by said portable electronic device D1-DN.

In the event that the counted connection time period is less than the set time limit interval for sending the user training data acquired by said portable electronic device D1-DN, the method 300 comprises a step of maintaining 325, by the portable electronic device D1-DN, the data connection with the central unit 1 of training data collection.

In the event that the counted connection time period is equal to the set limit time interval for sending the user training data acquired by said portable electronic device D1-DN, the method 300 comprises steps of:
- disconnecting 326, by the portable electronic device D1-DN, from the central unit 1 of training data collection;
- counting 327 the time of data disconnection from the central unit 1 of training data collection;
- connecting 328, by the portable electronic device, to the central unit 1 of training data collection at the end of a set data disconnection time period (equal, for example, to at least 2 or 3 seconds).

According to an embodiment, in combination with any one of the preceding ones, the step of assigning 304, to said portable electronic device D1-DN, the set time-slot (T1-TM), subsequent to the set time-slot previously assigned, for a next connection to the central unit 1 of training data collection, is performed by the user training data collection unit 1.

According to an embodiment, alternatively to the preceding one but in combination with all the others, the step of assigning 304, to said portable electronic device D1-DN, of the set time-slot T1-TM, subsequent to the set time-slot previously assigned, for a next connection to the central unit 1 of training data collection, is performed by the portable electronic device D1-DN.

According to an embodiment, in combination with any one of the preceding ones, the method 300 comprises a step of providing 329, by the central unit 1 of training data collection, within each time-slot T1-TM, a set number A1-AR of allocations, reserved for the plurality PD of portable electronic devices, which may be supported within the same time-slot (Figure 2a).

The set number A1-AR of allocations reserved for the plurality PD of portable electronic devices, dependent on the technology employed for wireless connection between each portable electronic device D1-DN and the central unit 1 of training data collection, is less than the number of portable electronic devices D1-DN of said plurality.

It is reiterated that the set number A1-AR of allocations reserved for the plurality PD of portable electronic devices that may be supported within the same time-slot does not correspond to the maximum number of data connections reserved for the plurality PD of portable electronic devices that may be supported within the same time-slot.

Indeed, one or more (conventionally one) allocations within the same time-slot are deliberately not usable by the system 100 during its implementation, but are kept only as buffer or backup allocations possibly employable, should it be necessary, for the first data connection by new portable electronic devices.

Under steady-state conditions, in the event that there are no requests for first data connection by new portable electronic devices, such one or more buffer or backup allocations will never be employed.

In the example of Figures 2b-2n, which will be described below, each time slot provides for a maximum number of five possible data connections A1-A5, but only four data connections A1-A4 (for example) are actually reserved for the plurality PD of portable electronic devices, while a fifth data connection A5 is not used, since it is kept only as buffer or back-up.

With reference now also to Figures 1 and 2b-2n, an example of implementation is now described of the method for managing the data connection, in a training class, between the central unit 1 of training data collection and the plurality PD of portable electronic devices D1-DN suitable for tracking user training data, each associated with a respective user of the training class.

Each portable electronic device D1-DN, having already set a first connection with the central unit 1 of training data collection, is associated with a recognition identifier I1-IW (token) and a set time-slot (T1-TM) for a subsequent reconnection to the central unit 1 of training data collection.

As shown in Figure 2b, the plurality PD of portable electronic devices D1-DN suitable for tracking user training data comprises:
- a first portable electronic device D1 with an associated first recognition identifier I1 (token) and a set first time-slot T6 for subsequent reconnection to the central unit 1 of training data collection;
- a second portable electronic device D2 with an associated second recognition identifier I2 (token) and the set first time-slot T6 for a subsequent reconnection to the central unit 1 of training data collection;
- a third portable electronic device D3 with an associated third recognition identifier I3 (token) and a set second time-slot T7 for a subsequent reconnection to the central unit 1 of training data collection;
- a fourth portable electronic device D4 with an associated fourth recognition identifier I4 (token) and the set time-slot T7 for a subsequent reconnection to the central unit 1 of training data collection;
- a fifth portable electronic device D5 with an associated fifth recognition identifier I5 (token) and the set second time-slot T7 for a subsequent reconnection to the central unit 1 of training data collection.

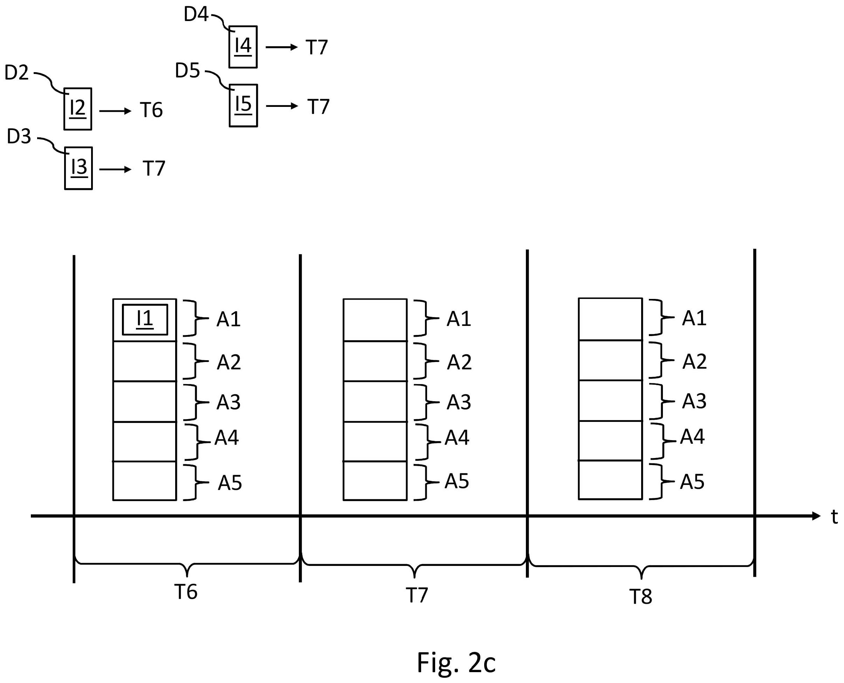

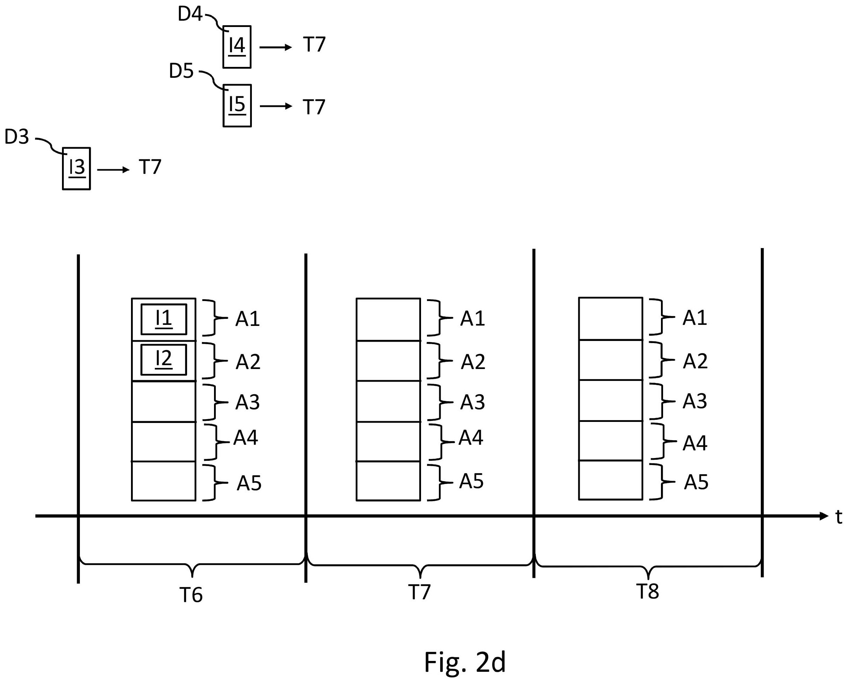

Once the set first time-slot T6 is temporally reached:
- the first portable electronic device D1 connects to the central unit 1 of training data collection, in a first allocation A1 of the set first time-slot T6 (Figure 2c) and sends, to the central unit 1 of training data collection, user training data acquired by said first portable electronic device D1 during the training of the respective user in the training class;
- the second portable electronic device D2 connects to the central unit 1 of training data collection, in a second allocation A2 of the set first time-slot T6 (Figure 2d) and sends, to the central unit 1 of training data collection, user training data acquired by said second portable electronic device D2 during the training of the respective user in the training class.

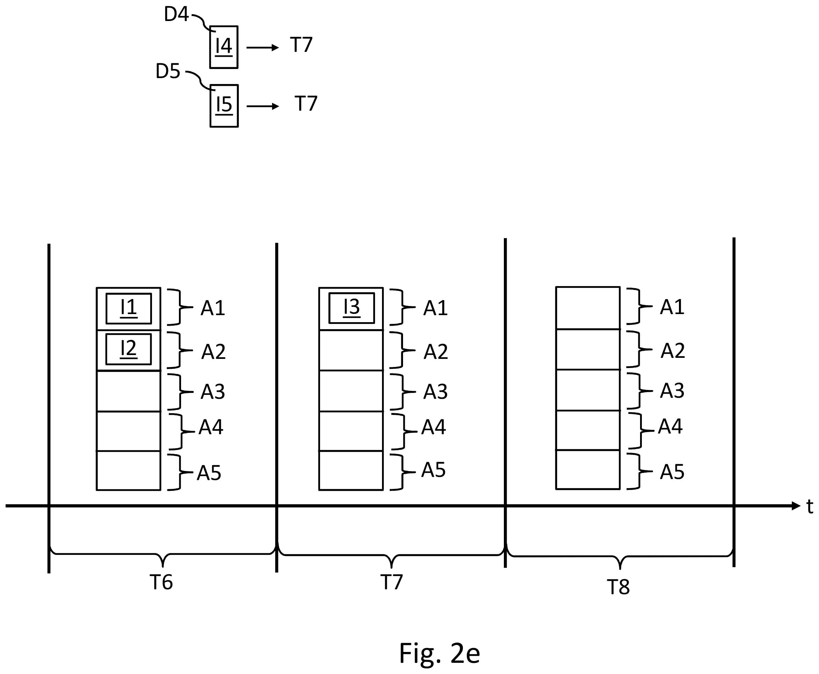

In the set second time-slot T7, the third portable electronic device D3 connects to the central unit 1 of training data collection, in a first allocation A1 of the set second time-slot T7 (Figure 2e) and sends, to the central unit 1 of training data collection, user training data acquired by said third portable electronic device D3 during the training of the respective user in the training class.

At this point, the first portable electronic device D1 disconnects from the central unit 1 of training data collection.

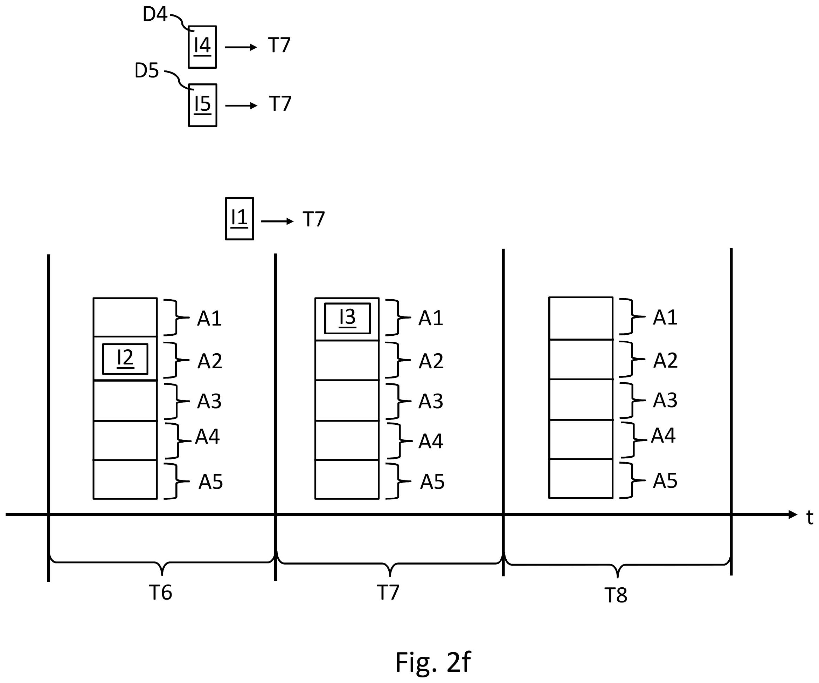

The central unit 1 of training data collection verifies free time-slots subsequent to the set first time-slot T6 previously assigned to the first portable electronic device D1 for connection to the central unit 1 of training data collection and assigns to the first portable electronic device D1, the set second time-slot T7, subsequent to the previously assigned set first time-slot T6, for a next connection to the central unit 1 of training data collection (Figure 2f).

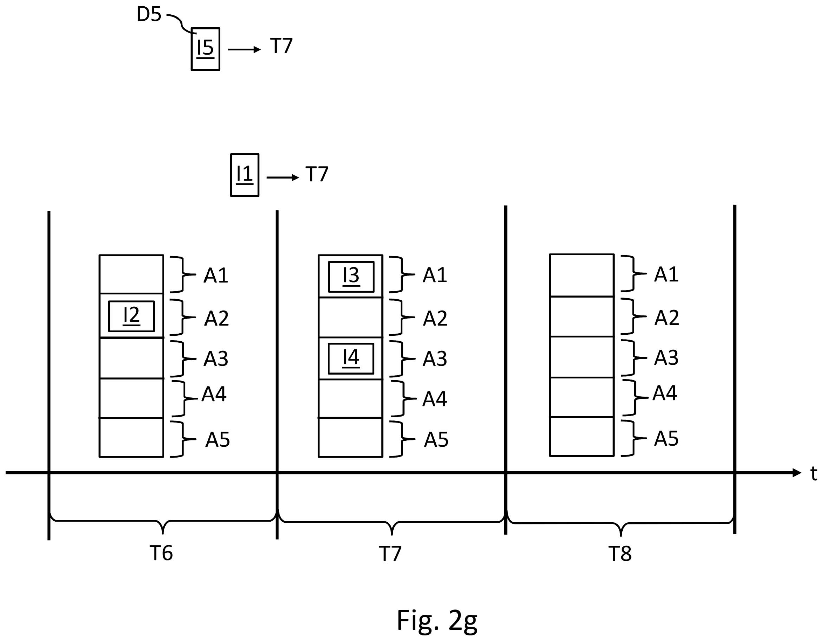

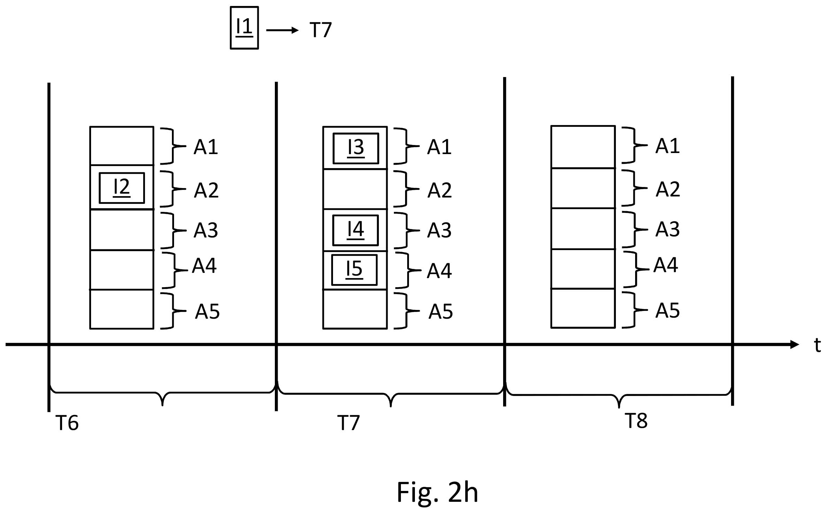

In the set second time-slot T7:
- the fourth portable electronic device D4 connects to the central unit 1 of training data collection, in a third allocation A3 of the set second time-slot T7 (figure 2g) and sends, to the central unit 1 of training data collection, user training data acquired by said fourth portable electronic device D4 during the training of the respective user in the training class;
- the fifth portable electronic device D5 connects to the central unit 1 of training data collection, in a fourth allocation A4 of the set second time-slot T7 (Figure 2h) and sends, to the central unit 1 of training data collection, user training data acquired by said fifth portable electronic device D5 during the training of the respective user in the training class.

At this point, the second portable electronic device D2 disconnects from the central unit 1 of training data collection.

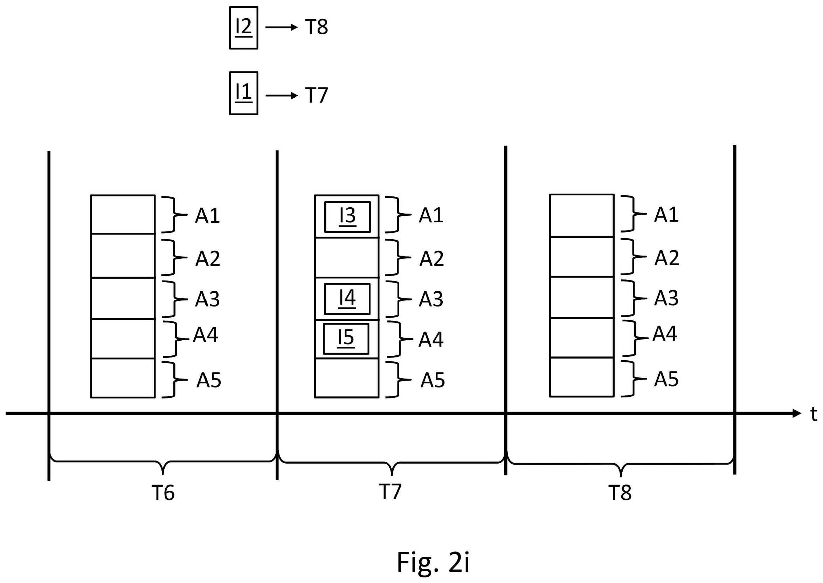

The central unit 1 of training data collection verifies free time-slots subsequent to the set first time-slot T6 previously assigned to the second portable electronic device D2 for connection to the central unit 1 of training data collection and assigns to the second portable electronic device D2, a set third time-slot T8, subsequent to the set first time-slot T6 previously assigned, for a subsequent connection to the central unit 1 for data collection (Figure 2i).

At this point, the third portable electronic device D3 disconnects from the central unit 1 of training data collection.

The central unit 1 of training data collection verifies free time-slots subsequent to the set second time-slot T7 previously assigned to the third portable electronic device D3 for connection to the central unit 1 of training data collection and assigns to the third portable electronic device D3, the set third time-slot T8, subsequent to the set second time-slot T7 previously assigned, for a next connection to the central unit 1 for data collection (Figure 2I).

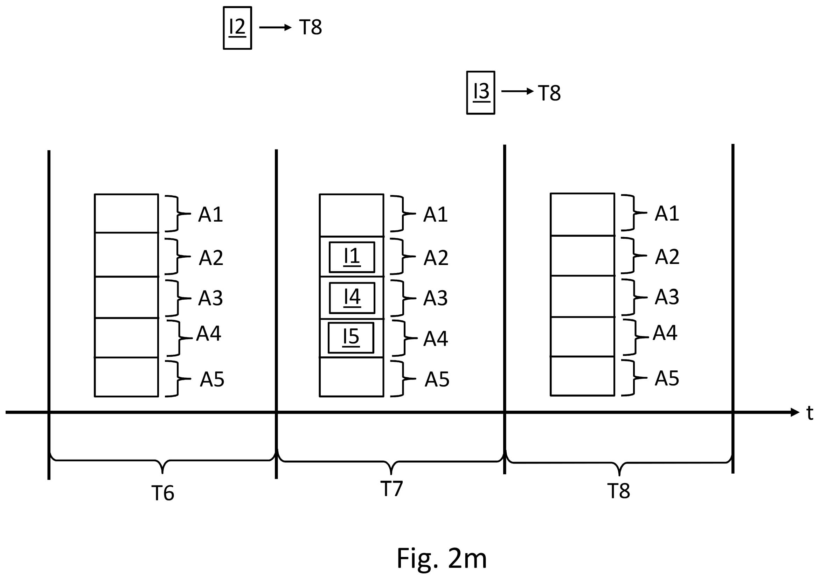

In the set second time-slot T7:
- the first portable electronic device D1 connects again to the central unit 1 of training data collection, in a second allocation A2 of the set second time-slot T7 (Figure 2m) and sends, to the central unit 1 of training data collection, user training data acquired by said first portable electronic device D1 during the training of the respective user in the training class.

At this point, the fourth portable electronic device D4 disconnects from the central unit 1 of training data collection.

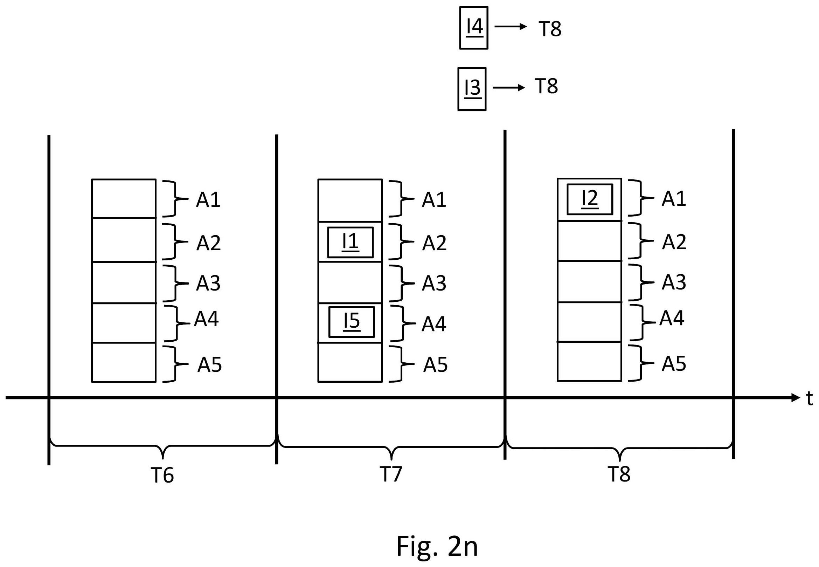

The central unit 1 of training data collection verifies free time-slots subsequent to the set second time-slot T7 previously assigned to the fourth portable electronic device D4 for connection to the central unit 1 of training data collection, and assigns to the fourth portable electronic device D3, the set third time-slot T8, subsequent to the set second time-slot T7 previously assigned, for a next connection to the central unit 1 of training data collection (Figure 2n).

In the set third time-slot T8:
- the second portable electronic device D2 reconnects to the central unit 1 of training data collection, in a first allocation A1 of the set third time-slot T8 (Figure 2n) and sends, to the central unit 1 of training data collection, user training data acquired by said second portable electronic device D2 during the training of the respective user in the training class.

It is worth noting that the object of the present invention is fully attained.

Indeed, the method and related system for managing the data connection, in a training class, between a central unit of training data collection and a plurality of portable electronic devices suitable for tracking user training data, make it possible to overcome the limitations of the prior art, advantageously ensuring that each portable electronic device can successfully connect to the central unit of training data collection so as to communicate, in a reliable manner, the most up-to-date tracked training data to the central unit of training data collection.

This is due to the fact that each portable electronic device, once the user training data have been transmitted to the central unit of training data collection, may disconnect and, simultaneously, is assigned a set time-slot in which to reconnect to the central unit of training data collection to transmit the updated user training data with respect to those transmitted in the last connection.

By applying this connection / disconnection policy, with associated assignment of a set time-slot for the next connection, it is possible to manage a greater number of portable electronic devices than the allocations that each time-slot has available for the simultaneous connection of multiple portable electronic devices to the central unit of training data collection.

Those skilled in the art may make changes and adaptations to the embodiments of the method and related system described above and can replace elements with others which are functionally equivalent in order to meet contingent needs without departing from the scope of the following claims. Each of the features described as belonging to a possible embodiment can be implemented irrespective of the other embodiments described.

## Claims

1. Method (300) of managing the data connection, in a training class, between a central unit (1) of training data collection and a plurality (PD) of portable electronic devices (D1-DN) suitable for tracking user training data, each portable electronic device (D1-DN) being associated with a respective user of the training class, each portable electronic device (D1-DN) being associated with a recognition identifier (I1-IW) and a set time-slot (T1-TM) for a subsequent reconnection to the central unit (1) of training data collection, said set time-slot (T1-TM) having been assigned to the portable electronic device (D1-DN) prior to the previous disconnection by the central unit (1) of training data collection, the method (300) comprising steps of:
- connecting (301), by means of a portable electronic device (D1-DN) of said plurality (PD) of portable electronic devices (D1-DN), to the central unit (1) of training data collection in the set time-slot (T1-TM) associated with said portable electronic device (D1-DN);
- sending (302) to the central unit (1) of training data collection, by said portable electronic device (D1-DN), user training data acquired by said portable electronic device (D1-DN) relating to the training of the respective user in the training class;
- following the reception of the user training data sent by said portable electronic device (D1-DN), verifying (303), by the central unit (1) of training data collection, free time-slots (T1-TM) subsequent to the previously set time-slot (T1-TM) assigned to the portable electronic device (D1-DN) for the connection to the central unit (1) of training data collection;
- assigning (304), by the central unit (1) of training data collection, to said portable electronic device (D1-DN), a set time-slot (T1-TM), subsequent to the previously assigned set time-slot, for a next connection to the central unit (1) of training data collection;
- following the receipt of the set time-slot (T1-TM) for the next connection to the central unit (1) of training data collection, disconnecting (305), by the portable electronic device (D1-DN), from the central unit (1) of training data collection.

2. The method (300) according to claim 1, comprising a step of verifying (306), by each portable electronic device (D1-DN) of said plurality (PD), at each data connection with the central unit (1) of training data collection, if said data connection is the first data connection with the central unit (1) of training data collection or a data connection subsequent to the first data connection with the central unit (1) of training data collection.

3. The method (300) according to claim 2, further comprising a step of verifying (307), by the central unit (1) of training data collection, following a data connection of a portable electronic device (D1-DN) of said plurality (PD), the knowledge or otherwise of the recognition identifier (I1-IW) associated with said portable electronic device (D1-DN),
if the recognition identifier (I1-IW) associated with said portable electronic device (D1-DN) is known to said central unit (1) of training data collection, the method (300) comprises a step of sending (308), by the central unit (1) of training data collection, a value representative of the positive outcome of this verification to said portable electronic device (D1-DN),
if the recognition identifier (I1-IW) associated with said portable electronic device (D1-DN) is unknown to said central unit (1) of training data collection, the method (300) comprises a step of sending (309), by the central unit (1) of training data collection, a value representative of the negative outcome of this verification to said portable electronic device (D1-DN).

4. The method (300) according to claim 2 or 3, wherein, if the verified data connection is a data connection subsequent to the first data connection with the central unit (1) of training data collection, the method (300) comprises a step of reading (310), by the portable electronic device (D1-DN), information representative of the training from the central unit (1) of training data collection.

5. The method (300) according to any one of the preceding claims 2 to 4, wherein, if the verified data connection is a data connection subsequent to the first data connection with the central unit (1) of training data collection, the method (300) comprises a step of setting (311), by the portable electronic device (D1-DN), a set time instant of interruption of the data connection with the central unit (1) of training data collection, based on a set minimum time interval of data reconnection between the portable electronic device (D1-DN) and the central unit (1) of training data collection, provided by the central unit (1) of training data collection based on the set time-slot (T1-TM) assigned for the next data connection.

6. The method (300) according to any one of the preceding claims 2 to 5, wherein, if the verified data connection is a data connection subsequent to the first data connection with the central training data collection unit (1), the method (300) comprises a step of communicating (312), by the central unit (1) of training data collection, to the portable electronic device (D1-DN) whose data connection has just been verified, an updated training status value.

7. The method (300) according to any one of the preceding claims 2 to 6, wherein, if the verified data connection is the first data connection to the central unit (1) of training data collection, the method (300) comprises a step of reading (313), by the portable electronic device (D1-DN), information representative of the training from the central unit (1) of training data collection and sending (314) to the central unit (1) of training data collection at least one user identification code.

8. The method (300) according to claim 7, comprising steps of:
- associating (315), by the central unit (1) of training data collection, a recognition identifier (I1-IW) with the user identification code received from the portable electronic device (D1-DN);
- sending (316) to the portable electronic device (D1-DN), by the central unit (1) of training data collection, the respective user identification code with the associated recognition identifier (I1-IW).

9. The method (300) according to any one of any of the preceding 2 to 8, wherein the step of verifying (306), at each data connection with the central unit (1) of training data collection, if said data connection is the first data connection with the central unit (1) of training data collection or a data connection subsequent to the first data connection with the central unit (1) of training data collection unit, is performed, by each portable electronic device (D1-DN) of said plurality (PD), based on said information representative of the training.

10. The method (300) according to any one of the preceding claims 2 to 9, wherein, if the verified data connection is the first data connection with the central unit (1) of training data collection, the method (300) further comprises a step of updating (318), by the central unit (1) of training data collection, a training duration value.

11. The method (300) according to any one of the preceding claims 2 to 10, wherein, if the verified data connection is the first data connection with the central unit (1) of training data collection unit, the method (300) comprises a step of associating (319), by the central unit (1) of training data collection unit, to the user training data received from said portable electronic device (D1-DN) a user code of the user with which said portable electronic device (D1-DN) is associated.

12. The method (300) according to any one of the preceding claims, further comprising a step of setting (320), by each portable electronic device (D1-DN), a set time interval in which to make a data connection to the central unit (1) of training data collection.

13. The method (300) according to claim 12, further comprising a step of verifying and disconnecting (321), by each portable electronic device (D1-DN), from the central unit (1) of training data collection in the event that the data connection has not been established upon reaching the set time interval in which to make the data connection to the central unit (1) of training data collection.

14. The method (300) according to any one of the preceding claims, further comprising a step of setting (322), by each portable electronic device (D1-DN), a set time limit interval of sending, to the central unit (1) of training data collection, the user training data acquired by said portable electronic device (D1-DN) during the training of the respective user in the training class.

15. The method (300) according to claim 14, comprising steps of:
- counting (323), by the portable electronic device (D1-DN) connected to the central unit (1) of training data collection, the time period of data connection with the central unit (1) of training data collection;
- comparing (324), by the portable electronic device (D1-DN), the counted time period of data connection with the set time limit interval for sending the user training data acquired by said portable electronic device (D1-DN);
if the counted time period of data connection is less than the set time limit interval for sending the user training data acquired by said portable electronic device (D1-DN), maintaining (325), by the portable electronic device (D1-DN), the data connection with the central unit (1) of training data collection unit;
if the counted time period of data connection is equal to the set time limit interval for sending the user training data acquired by said portable electronic device (D1-DN):
- disconnecting (326), by the portable electronic device (D1-DN), from the central unit (1) of training data collection;
- counting (327) the time of data disconnection from the central unit (1) of training data collection;
- connecting (328), by the portable electronic device, to the central unit (1) of training data collection at the end of a set time period of data disconnection.

16. The method (300) according to any one of the preceding claims, wherein the step of assigning (304), to said portable electronic device (D1-DN), the set time-slot (T1-TM), subsequent to the previously assigned set time-slot, for a forthcoming connection to the central unit (1) of training data collection, is performed by the user training data collection unit (1),
or
wherein the step of assigning (304), to said portable electronic device (D1-DN), of the set time-slot (T1-TM), subsequent to the previously assigned set time-slot, for a next connection to the central unit (1) of training data collection, is performed by the portable electronic device (D1-DN).

17. The method (300) according to any one of the preceding claims, comprising a step of providing (329), by the central unit (1) of training data collection, within each time-slot (T1-TM) a set number (A1-AR) of allocations, reserved for the plurality (PD) of portable electronic devices, which may be supported within the same time-slot.

18. System (100) for managing the data connection, in a training class, between a central unit (1) of training data collection and a plurality (PD) of portable electronic devices (D1-DN) suitable for tracking user training data, the system (100) comprising:
- a central unit (1) of training data collection;
- a plurality (PD) of portable electronic devices (D1-DN) suitable for tracking user training data, each portable electronic device (D1-DN) being associated with a respective user of the training class,
each portable electronic device (D1-DN) having associated a recognition identifier (I1-IW) and a set time-slot (T1-TM) for subsequent reconnection to the central unit (1) of training data collection, said set time-slot (T1-TM) having been assigned to the portable electronic device (D1-DN) prior to the previous disconnection from the central unit (1) of training data collection;
the system (100) being configured to perform the steps of method (300) in accordance with any of the preceding claims.

19. The system (100) according to claim 18, wherein each portable electronic device (D1-DN) comprises sensors for detecting user biometric parameters.
